Europäisches Patentamt

European Patent Office

Office européen des brevets

(19)

(11) Publication number: **0 067 800**
A2

(12) **EUROPEAN PATENT APPLICATION**

(21) Application number: **82830175.4**

(22) Date of filing: **15.06.82**

(51) Int. Cl.³: **A 47 J 27/20**
**A 22 C 7/00**

(30) Priority: **15.06.81 IT 2231981**

(43) Date of publication of application:
**22.12.82 Bulletin 82/51**

(84) Designated Contracting States:
**AT BE CH DE FR GB LI NL**

(71) Applicant: **Falavigna, Carlo Alberto**
**Via Turati, 1**
**Gallarate(IT)**

(71) Applicant: **Buratti, Achille**
**Via Monte Ameno, 4**
**Somma Lombardo(IT)**

(72) Inventor: **Falavigna, Carlo Alberto**
**Via Turati, 1**
**Gallarate(IT)**

(72) Inventor: **Buratti, Achille**
**Via Monte Ameno, 4**
**Somma Lombardo(IT)**

(74) Representative: **Monti, Umberto et al,**
**c/o SOCIETà ITALIANA BREVETTI S.p.A. Via Carducci 8**
**I-20123 Milano(IT)**

(54) **Process for pressing products within a cooking container, particularly foodstuff, and a container carrying out such process.**

(57) When preparing foods cooked in containers or vessels (1, 3) the pressing operation to compensate for the reduction of volume caused by the cooking is automatically achieved in the container upon reaching a predetermined temperature by at last one temperature-operated actuator. The actuator (21, 30) either controls a holding device (20-28) retaining compression springs (15) already present in conventional cooking vessels, or directly exerts the pressing action and in such case locking means (36, 37) is provided to keep the lid (3) pressed against the product (2) after that the compression action of the actuator ceases when the temperatures drops below the intervention threshold. The invention also relates to containers or molds designed to carry out the process.

Fig. 1

EP 0 067 800 A2

"A PROCESS FOR PRESSING PRODUCTS WITHIN A COOKING
CONTAINER, PARTICULARLY FOODSTUFF, AND A CONTAINER
CARRYING OUT SUCH PROCESS"

The present invention relates to a process for preparing foodstuffs cooked in suitable containers or vessels also called molds, wherein the compression of the product in order to compensate for the reduction of volume caused by the cooking is automatically achieved within the container upon reaching a predetermined temperature, as well as to containers or molds suitably improved to carry out such a process.

When industrially preparing many food products such as meat, ham etc., the raw meat suitably treated is placed in metal kettles or molds, e.g. of aluminium, having a lid that can be spring-closed so as to exert a slight pressure over the product thanks to fastening members formed, for example, by side pawls on the containers engaging two or more racks fastened to the lid. The containers are introduced into cooking chambers or ovens and kept there for a proper cooking time. Since the cooking causes a reduction of volume of the product it is necessary to further compress the product (pressing operation) before the containers can be delivered to the cooling rooms. Moreover this operation is required also to squeeze out any excess of jelly and maintain a compact product when cooling. The pressing operation is presently carried out for each mold in a press, manually or automatically operated, in a separate step in the preparation of the product. This requires that each mold is to be removed from the cooking carriages or racks, transferred to the press, pressed and returned to the conveying means towards the cooling step. Beyond the additional costs of the apparatus, the procedure is quite difficult to be automatized and therefore implies high costs for the man-power to load and unload the molds.

It is therefore an object of the present invention to realize a process for preparing the above products wherein the pressing operation is automatically achieved in the cooking step without any manual intervention and without additional and expensive apparatuses.

It is another object of the present invention to realize an improved container or mold for cooking foodstuffs that automatically accomplish such compression or squeezing during the cooking of the product by means of temperature-operated actuators.

It is another object of the invention to realize such a container wherein the pressing of the product is carried out by spring means already present in the container driven by temperature-operated actuators.

Finally it is a further object of the invention to realize a container or cooking vessel wherein the compressing is directly carried out by temperature--operated actuators.

The above and other objects and the relevant advantages of the invention will be clearly understood from the following description of some non-limiting embodiments shown in the attached drawings in which:

FIGURE 1 illustrates a cooking container according to the invention, partially cross-sectioned;

FIGURES 2 and 3 illustrate another embodiment of the cooking container according to the invention; and

FIGURE 4 schematically illustrates a further embodiment of the container according to the invention.

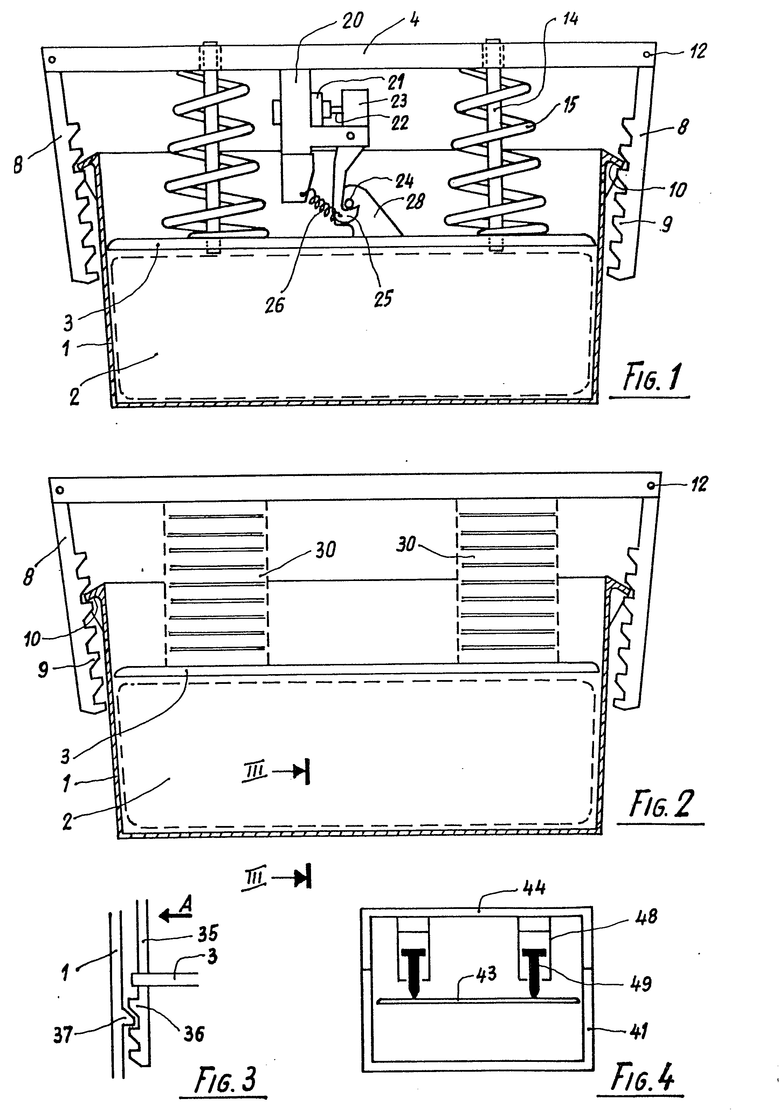

The cooking container (or mold) of the invention shown in Fig. 1 includes a main body or vessel 1 (shown as a cross-section) closed by a lid 3 (not cross-sectioned for a better clearness) having an auxiliary upper pressing arrangement formed by a cross-bar 4 to the ends of which engagement members are pivotally joined at 12. Such members include bars 8 having teeth 9 on one face engaging pawls 10 of the vessel.

Two shafts or stems 14 rise from the lid passing through holes in cross-bar 4 and guide compression helical springs 15 that are able to press lid 3 against product 2 shown with dashed line driving the lid downward. Before being conveyed to the cooking station the product within the vessel is slightly compressed by means of a press that pushes down cross-bar 4 causing the engagement of teeth 9 with pawls 10. The above disclosed container is of a conventional type and after the cooking has to be returned to the press for further compressing the product that is thereafter kept under pressure thanks to the engagement of teeth 9 having a higher position with respect to the ones of the pre-cooking engagement.

- 4 -

According to a first embodiment of the invention the mold provides for an additional device to command the automatic compression that will be now disclosed with more details. Such a device comprises a bracket 20 fastened to cross-bar 4 and carrying a side portion with an oscillating pivoted member formed by a part 23 and by a hook 25 that engages a pin 24 mounted on a tab 28 fastened to lid 3. Under such circumstances, before cooking, springs 15 are compressed between cross-bar 4 and the lid but without exterting any appreciable pressure against the product 2 beneath. Disengagement of hook 25 from pin 24 is controlled by an actuator 21 having a small plunger 22 positioned against member 23. Such actuator is of a known type adapted to extend plunger 22 upon reaching a predetermined temperature. These known actuators include a metal plunger placed in a housing also containing industrial waxes produced by distillation. At predetermined temperatures these waxes undergo relevant volumetric expansion converting the temperature variation into a displacement of the position of the plunger. The volumetric expansion so produced is such to be substantially uneffected by an opposing force rather strong (in the order of ten kg and larger).

From the above it is evident the working of the vessels and the way the process performs. During the cooking the product undergoes a volumetric reduction and when the actuator reaches a predetermined temperature, it causes the plunger to extend releasing the holding arrangement. The operation compresses returning spring 26 that successively will reposition hook 25 to the start position. Due to the disengagement of the holding device springs 15 previously compressed when closing the container are free to extend and can press the product.

This compression is maintained even when the temperature falls down thanks to the engagement of teeth 9 with pawls 10. This way the pressing of the product is automatically accomplished during the cooking step and the container can be directly transferred to the cooling.

With reference now to Figs. 2 and 3 it is shown an alternative embodiment of the container according to the invention. The same numerals are employed for parts that are equal or corresponding. In this container the compression springs are replaced by temperature-operated actuators built as metal bellows having a cylindrical profile suitable to modify their longitudinal dimension (length) in consequence of a thermal change. These metal bellows too are well known industrial components exploiting the same principle of the expansion of suitably selected substances. Thanks to the force that these devices can supply they can replace compression springs 15. More particularly when employing the container according to this embodiment a strong initial compression is no longer required to charge springs 15 since the necessary pressure is directly supplied by actuators 30. Upon reaching a predetermined temperature bellows 30 expand thus compressing product 2. Since in this embodiment the force of compression depends from the actual temperature, locking or holding means is provided to prevent the lid from being rised again when the temperature decreases. An embodiment of such means is illustrated in Fig.3 showing a cross-section along line III-III of Fig. 2. It comprises a toothed bar 35 having teeth 36 laterally positioned with respect to the lid and able to swing about the latter. The inner wall of container 1 provides for a tooth 37 adapted to engage one of teeth 36. The expansion of bellows 30 causes the lowering of lid 3 that is subsequently blocked by the engagement between teeth 36 and 37 even when the temperature decreases. In order to have the lid free again the upper end portion of bar 35 is pressed along the direction shown by arrow A to disengage the teeth. The container is equipped with two of such devices positioned on opposite walls to ensure an effective blocking.

Fig. 4 schematically shows another embodiment of the container according to the invention that is functionally similar to the one of Fig. 2. In this embodiment there are provided temperature-operated actuators 48 having a plug 49 directly pressing against lid 43. 41 indicates the container whereas reference 44 schematically represents the upper frame that is fastened to vessel 41 in the operation. In this case too there are provided holding means similar to the device of Fig. 3 or accomplishing the same function.

Although the invention has been illustrated with reference to same preferred embodiments of the container, it is not to be limited to the particular process or to the described embodiments, its scope extending to the obvious changes and/or modifications that will be evident to the skilled of the art.

0067800

- 1 -

CLAIMS

1. A process for preparing food products that are to be cooked in containers or closed vessels, characterized in that the pressing operation of the product to compensate for the reduction of volume caused by cooking in automatically accomplished within the container upon reaching a predetermined temperature thanks to at least one temperature-operated actuator incorporated within the container.

2. A container for cooking and automatically compressing food products (2) comprising an open vessel (1) and a lid (3) that is applied to the former by means of members (8, 9, 10, 12, 4) adapted to fasten the vessel (1) to an upper cross-bar (4), two or more compression springs (15) being mounted between the cross-bar (4) and the lid (3) to maintain the product (2) under pressure during the cooling of the same, characterized in that between the lid (3) and the cross-bar (4) there is provided a release mechanism (20-28) to keep the springs (15) compressed without applying a pressure to the lid (3) and in that said mechanism (20-28) includes a temperature-operated actuator (21) acting on a retaining hook (25) to disengage the lid (3) from said cross-bar (4) so that said springs (15) exert a compression of the product (2) upon reaching a predetermined temperature.

3. A container as claimed in claim 2 characterized in that said temperature-operated actuator (21) includes a plunger (22) placed in a housing (21) and movable due to the volumetric expansion of a microcrystalline wax.

4. A container as claimed in claim 2, characterized in that said actuator is formed by a substantially cylindrical metal bellows having a longitudinal dimension that changes appreciably upon reaching a predetermined temperature.

5. A container for cooking and automatically compressing food products comprising an open vessel (1) and a lid (3) that is applied to the former by means of engaging members (8, 9, 10, 12) adapted to fasten the vessel (1) to an upper cross-bar (4), characterized in that between said cross-bar (4) and said lid (3) there is provided at least one temperature-operated actuator (30) adapted to change its longitudinal dimension upon reaching a predetermined temperature in order to compress the product; and in that between the vessel (1) and the lid (3) unidirectional engagement means (36, 37) is provided for blocking the lid in the compressing position when the temperature decreases.

6. A container as claimed in claim 5, characterized in that said temperature-operated actuator includes a plunger (49) placed in a housing (48) and movable due to the volumetric expansion of a microcrystalline wax.

7. A container as claimed in claim 5, characterized in that said temperature-operated actuators (30) are substantially cylindrical metal bellows having a longitudinal dimension appreciably changing upon reaching a predetermined temperature.

0067800

*Fig. 1*

*Fig. 2*

*Fig. 3*

*Fig. 4*